Europäisches Patentamt

European Patent Office

Office européen des brevets

(11) Publication number: **0 083 818**
**B1**

(12) **EUROPEAN PATENT SPECIFICATION**

(45) Date of publication of patent specification: **08.04.87**

(21) Application number: **82201660.6**

(22) Date of filing: **24.12.82**

(51) Int. Cl.⁴: **G 01 N 27/52,** G 01 N 27/28

(54) **Electrode for realizing contact with a liquid, such as a redox electrode and redox measuring apparatus provided with a suchlike electrode.**

(30) Priority: **05.01.82 NL 8200007**

(43) Date of publication of application:
**20.07.83 Bulletin 83/29**

(45) Publication of the grant of the patent:
**08.04.87 Bulletin 87/15**

(84) Designated Contracting States:
**AT BE CH DE FR GB IT LI NL SE**

(56) References cited:
**EP-A-0 036 171**
**DE-A-1 773 821**
**DE-A-2 006 682**
**GB-A- 904 457**
**US-A-4 218 299**

**"Glass electrodes for Hydrogen and other Cations", edited by George Eisenmann Marcel Dokka, Inc., New-York, 1967, pages 100-132, 175-222**

(73) Proprietor: **Yokogawa Electrofact B.V.**
**Radiumweg 30**
**NL-3812 RA Amersfoort (NL)**

(72) Inventor: **De Jong, Hendrik**
**Prinsenhof 18**
**NL-3871 DB Hoevelaken (NL)**

(74) Representative: **de Wit, Gerard Frederik, Ir. et al**
**Octrooi- en Merkenbureau De Wit B.V.**
**Breitnerlaan 146**
**NL-2596 HG Den Haag (NL)**

Courier Press, Leamington Spa, England.

## Description

The invention relates to an electrode having a conducting part for realizing contact with a liquid, provided with a support of insulating material and a conductor passed through a passage in said support and connected to said part and to a redox measuring apparatus in which such an electrode is used.

Known electrodes, specially those for measuring redox potentials have a number of disadvantages. Namely it has appeared that it is difficult to manufacture such an electrode with sufficient resistance to high temperatures and/or pressures, whereas further such a smooth cleanable shape that a high degree of sterility can be guaranteed in many cases, for instance in the fermentation industry may be a problem.

With known electrodes a wire, for instance of platinum is passed directly through a glass of suitable expansion coefficient, for instance a silicate-lead glass. Such a glass has, however, a relatively low transformation temperature, so that its resistance to high temperatures is very limited. When using other metals, such as gold or silver with redox measurements, it is impossible to mount a wire of these metals directly in the glass such that a good seal is obtained. In these instances one uses a silicon rubber or an epoxy resin to lute the wire in the support.

Leakage along the passage of the wire may lead to faulty measurements, when the wire at the other side is formed by a conductor of another metal, wherewith the final measurement gives a redox potential which is composed from that one that fits with the metal of the passage wire and that one that fits with the metal to which this wire is connected.

This is also the reason why for redox electrodes a normal electro plating of a metal support is not allowed, because such a cover in many instances is unsufficiently liquid tight.

The German Offenlegungsschrift DE—A—1 773 821 describes an electrode having a conducting layer for realizing contact with a liquid, provided with a support of insulating material and a conductor passed through a passage in this support, said conducting layer is applied to said support at the side thereof that is intended to engage the liquid, covers the passage at its side away from the liquid and engages the conductor passed through the support.

This known electrode is a pH electrode, having glass portions contacting the · liquid to be measured at their one side and a conducting layer at their other side. Conducting leads connecting these layers are fed through holes in the wall of a glass tube forming the electrode support.

With this construction the metal parts do not contact the liquid to be measured, whereas a reliable liquid seal is provided by the glass portions, because any leakage through this glass portions would short circuit the glass electrode and deteriorate it.

According the invention the problems relating to redox electrodes discussed above are solved by modifying the electrode known from DE—A—1 773 821 in such a way that said conducting layer directly contacts the liquid to be measured, is impervious to the liquid and is attached in liquid tight manner to the support.

Because with the invention the layer is liquid tight and this layer is applied in a liquid tight manner at the outer side of the electrode as well leakage problems as problems which arise because the liquid contacts the conductor when the latter is of a material differing from that of the layer, are avoided.

Moreover the outer side of the electrode is completely smooth and it has no corners in which material may stick, such as occur when a wire is lead out of a plane, which simplifies in a high degree to make or keep the electrode sterile. In this connection it is pointed to the fact that sterile electrodes for redox measurements are of great importance in the fermentation industry, in which great damage may arise by insufficiently sterile conditions.

According to a further elaboration of the invention it is provided that the end of the conductor is flush with the surface of the support. It has appeared that in this way a sufficient electrical connection between the conductor and the layer can be realized and that the layer at the location of the conductor is undisturbed and remains sufficiently liquid tight. Consequently the conductor itself never contacts the liquid.

Of course an additional safety is obtained that the measurement is not wrongly influenced because the conductor contacts the liquid by providing when the conductor and the layer are of the same material.

An important advantage of the invention is, that the requirements to be met by the passage of the conductor through the support can be considerably lower. This means that use can be made of a glass sort having a high transformation temperature and/or a high chemical resistance, such as for instance boro-silicate glass, so-called pyrex glass of Corning or Duram 50 of Schott. Moreover manufacturing is relatively simple, because no passage problems arise and no special lutes such as an epoxy resin or a silicon rubber are necessary, so that the electrode according the invention not only with respect to thermal and chemical resistance, but also with respect to pressure resistance may include an important improvement with respect to the known art. A further possibility that is obtained with the invention is to make the support of ceramic material.

As already mentioned with the known art a platinum wire is directly melted in special glass when manufacturing a redox electrode, but other metals usable for redox measurements, such as gold or silver were passed through by means of a lute. By applying the invention this is not necessary any more and a direct passing through of all these metals is possible, also through an insulating material which is not matched to it with respect to the expansion coefficient.

A preferred embodiment of the invention provides, that the support has the shape of a cylinder with at its end a partial sphere, the layer covering the partial sphere and the adjoining part of the cylinder, the passage being located in the partial sphere.

Another embodiment of the invention provides that the support is a hollow cylinder and that the passage passes through the cylinder wall, the layer covering a preferably ring shaped part of the cylinder wall. In this connection is pointed to it, that the electrode according the invention is not only suitable for redox measurements, but also for for instance conductivity measurements. In this case one can with the electrode indicated above apply a number of spaced apart rings. Therewith it is of course possible to apply the ring shaped layers as well at the inner side of a cylindrical support, when the liquid is located within the support, as at the outside when the electrode is immersed in the liquid.

It has appeared that a good method for manufacturing the invention consists in that the layer is made by fritting a paste of a rolled mixture of metal, fine glass particles and a binding agent on the support. Such pastes are commercially available and the binding agent normally is a substance which evaporates at the fritting temperature, so that a mixture of glass particles and metal particles remains, which, as experience has shown, forms a homogeneous liquid tight conducting layer.

The invention also encompasses a redox measuring apparatus for determining redox potentials at higher temperatures and pressures and/or sterile conditions, provided with an electrode as described above.

The invention in the following is elucidated on hand of the drawing, in which:

Figure 1 schematically shows a cross-section through a first embodiment of the invention; and

Figure 2 shows a schematical cross-section through a second embodiment of the invention.

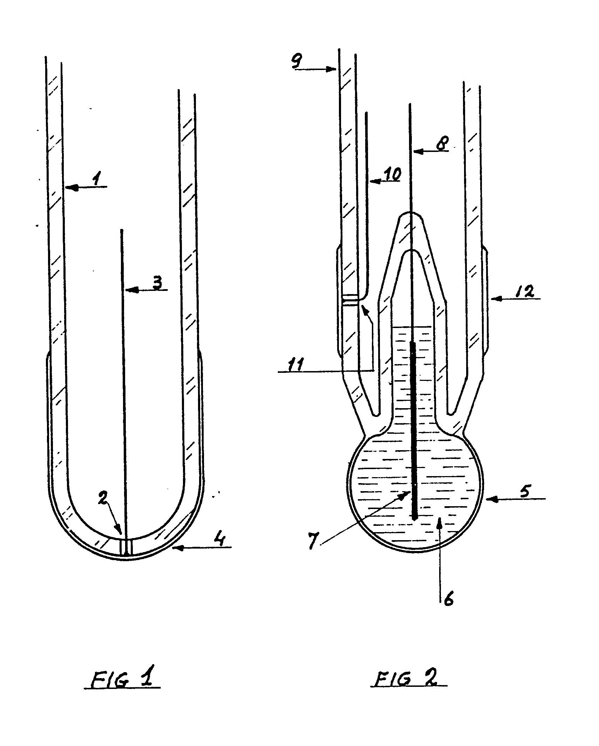

In Fig. 1 reference 1 indicates a cylindrical insulating support member ending in a partial sphere. In the centre of the partial spherical portion an opening 2 has been applied through which a conductor 3 passes. This conductor is fixedly connected to a liquid tight layer 4 which is adhered to the support 1 and provides an absolute liquid seal between the inside of support 1 and the liquid located outside it.

In Fig. 2 an embodiment has been shown of a redox electrode, with which the redox potential is not measured with respect to a reference electrode but with respect to a pH-electrode.

The hollow glass sphere 5 shown at the lower side contains a liquid 6 with a pH-value of for instance 7, in which a connecting member 7 protrudes which is connected to a conductor 8.

The wall 9 of the cylindrical portion above the pH-electrode part has a hole 11 through which a conductor 10 passes, which ends in a liquid tight layer 12, which has been applied according the invention. With this electrode it is possible to measure the redox potential of the metal of the layer 12 with respect to the pH-potential. The latter is measured via the glass wall 5 which can be considered to be a diaphragma, as is known per se.

It will be clear that an electrode as depicted above may contain a number of rings located above each other, by reason of which the possibility exists to measure potentials in different points of the liquid, for instance for carrying out conductivity measurements or suchlike.

The references indicated in the appending claims only serve the purpose of elucidation. In no way they are intended or can be interpreted as a limitation of the said claims.

**Claims**

1. Electrode having a conducting layer (4, 12) for realizing contact with a liquid, provided with a support (1, 9) of insulating material and a conductor (3, 10) passed through a passage (2, 11) in this support, said conducting layer is applied to said support at the side thereof that is intended to engage the liquid, covers the passage at its side away from the liquid and engages the conductor passed through the support characterized in that said conducting layer (4, 12) directly contacts the liquid to be measured, is impervious to the liquid and is attached in liquid tight manner to the support.

2. Electrode according to claim 1, characterized in that the end of the conductor is flush with the surface of the support.

3. Electrode according to claim 1 or 2, characterized in that the conductor and the layer are of the same material.

4. Electrode according to claim 1, 2, or 3, characterized in that the support is of a glass sort with a high transformation temperature and/or a great chemical resistance such as borosilicate glass.

5. Electrode according to claim 1, 2 or 3, characterized in that the support is of ceramic material.

6. Electrode according to one or more of the preceding claims 1—3, in which the conductor is of a material other than platinum or according to claim 4 or 5 characterized in that the conductor, having the form of a wire, is attached in the passage without lute means.

7. Electrode according to one or more of the preceding claims, characterized in that the support (1) has the shape of a cylinder with at its end a partial sphere, wherewith the layer (4) covers the partial sphere and part of the cylinder adjoining it, the passage (2) being located in the partial sphere.

8. Electrode according to one or more of the claims 1—6, characterized in that the support (9) is a hollow cylinder and in that the passage passes through the cylinder wall, wherewith the layer (12) covers a preferably ring shaped part of the cylinder wall.

9. Electrode according to claim 8, characterized in that the layer is located at the outer side of the cylindrical support and the conductor at the inner side thereof.

10. Electrode according to claim 8, characterized in that the layer is located at the inner side and the conductor at the outer side of the support.

11. Electrode according to one or more of the preceding claims, characterized in that the layer has been manufactured by fritting a paste of a rolled mixture of metal particles and fine glass particles and a binding agent on the support.

12. Electrode according to one or more of the preceding claims, characterized in that the layer is of platinum, gold or silver.

13. Redox measuring apparatus for determining redox potentials at higher temperatures or pressures and/or sterile conditions provided with an electrode according to one or more of the preceding claims.

**Revendications**

1. Electrode ayant une couche conductrice (4, 12) pour établir un contact avec un liquide, prévue d'un support (1, 9) d'un matériel isolant et un conducteur (3, 10) traversant un passage (2, 11) dans ce support, ladite couche conduisante étant appliquée audit support au côté de celui visé de contacter le liquide, couvre le passage à son côté détourné du liquide et contacte le conducteur traversant le support, caractérisée en ce que ladite couche conductrice (4, 12) contacte immédiatement le liquide à mesurer, est imperméable au liquide et a été attaché au support d'une manière imperméable au liquide.

2. Electrode suivant la revendication 1, caractérisée en ce que le bout du conducteur est plan avec la surface du support.

3. Electrode suivant la revendication 1 ou 2, caractérisée en ce que le conducteur et la couche sont d'un même matériel.

4. Electrode suivant la revendication 1, 2 ou 3, caractérisée en ce que le support est d'un sort de verre ayant une température de transformation haute et/ou une resistance chimique considérable, comme le verre boro-silicate.

5. Electrode suivant la revendication 1, 2 ou 3, caractérisée en ce que le support est d'un matériel céramique.

6. Electrode suivant une ou plusieurs des revendications précédentes 1—3, dans laquelle le conducteur est d'un matériel autre que le platine ou suivant la revendication 4 ou 5, caractérisée en ce que le conducteur, qui a la forme d'un fil, a été attaché dans le passage sans moyen gluant.

7. Electrode suivant une ou plusieurs des revendications précédentes, caractérisée en ce que le support (1) a la forme d'un cylindre avec à son bout une sphère partielle, la couche (4) couvrante la sphère partielle et part du cylindre adjacent, le passage (2) etant localisé dans la sphère partielle.

8. Electrode suivant une ou plusieurs des revendications 1—6 caractérisée en ce que le support (9) est un cylindre creux et en ce que le passage passe la paroi du cylindre, la couche (12) couvrante une partie préférable en forme d'un anneau de la paroi du cylindre.

9. Electrode suivant la revendication 8, caractérisée en ce que la couche est localisée au côté extérieur du support et le conducteur à son côté intérieur.

10. Electrode suivant la revendication 8, caractérisée en ce que la couche est localisée au côté intérieur et le conducteur au côté extérieur du support.

11. Electrode suivant une ou plusieurs des revendications précédentes, caractérisée en ce que la couche a été fabriquée par frittage sur le support d'une pâte ou un mélange roulé des particules métalliques et particules fines de verre et un moyen glutinatif.

12. Electrode suivant une ou plusieurs des revendications précédentes, caractérisée en ce que la couche est de platine, d'or ou d'argent.

13. Appareil de mesure rédox pour déterminer des potentiels rédox aux températures ou pressions relativement hautes et/ou conditions stériles prévu d'une électrode suivant une ou plusieurs des revendications précédentes.

**Patentansprüche**

1. Elektrode mit einer leitenden Schicht (4, 12) um Kontakt mit einer Flüssigkeit zu realisieren, versehen mit einem Träger (1, 9) von isolierendem Material und einem Leiter (3, 10) der durch einen Durchgang (2, 11) in diesem Träger geführt ist, wobei die genannte leitende Schicht an dem Träger angeordnet ist an dessen Seite die beabsichtigt ist die Flüssigkeit zu berühren, den Durchgang abdeckt an ihre von der Flüssigkeit abgewendete Seite und den Leiter berührt, der durch den Träger geführt ist, dadurch gekennzeichnet, dass die leitende Schicht (4, 12) unmittelbar die zu messende Flüssigkeit berührt, undurchdringlich für die Flüssigkeit ist und in flüssigkeitsdichter Weise an dem Träger befestigt ist.

2. Elektrode nach Anspruch 1, dadurch gekennzeichnet, dass das Ende der Leiter in einer Ebene liegt mit der Oberfläche des Trägers.

3. Elektrode nach Anspruch 1 oder 2, dadurch gekennzeichnet, dass der Leiter und die Schicht desselben Materials sind.

4. Elektrode nach Anspruch 1, 2 oder 3, dadurch gekennzeichnet, dass der Träger einer Glassorte ist mit hoher Transformationstemperatur und/oder grosser chemischen Beständigkeit sowie boro-silikat-Glas.

5. Elektrode nach Anspruch 1, 2 oder 3, dadurch gekennzeichnet, dass der Träger von keramischem Material ist.

6. Elektrode nach einem oder mehreren der vorangehenden Ansprüche 1—3, in welcher der Leiter eines Materials anders als Platin ist oder nach Anspruch 4 oder 5, dadurch gekennzeichnet, dass der Leiter die Form eines Drahtes hat, der in dem Durchgang ohne Kitt befestigt ist.

7. Elektrode nach einem oder mehreren der vorangehenden Ansprüche, dadurch gekennzeichnet, dass der Träger (1) die Form eines Zylinders mit an seinem Ende einer Teilkugel hat, wobei die Schicht (4) die Teilkugel und einen angrenzenden Teil des Zylinders bedeckt, wobei der Durchgang (2) in der Teilkugel liegt.

8. Elektrode nach einem oder mehreren der Ansprüche 1—6, dadurch gekennzeichnet, dass der Träger (9) einen Hohlzylinder ist und dass der Durchgang durch die Zylinderwand geht, wobei die Schicht (12) einen vorzugsweise ringförmigen Teil der Zylinderwand bedeckt.

9. Elektrode nach Anspruch 8, dadurch gekennzeichnet, dass die Schicht an der Aussenseite des zylindrischen Trägers und der Leiter an der Innenseite gelegen sind.

10. Elektrode nach Anspruch 8, dadurch gekennzeichnet, dass die Schicht an der Innenseite und der Leiter an der Aussenseite des Trägers gelegen sind.

11. Elektrode nach einem oder mehreren der vorangehenden Ansprüche, dadurch gekennzeichnet, dass die Schicht angefertigt ist durch eine Paste einer gewalzten Mischung von Metallpartikeln und feinen Glaspartikeln und einem Bindemittel auf dem Träger zu fritten.

12. Elektrode nach einem oder mehreren der vorangehenden Ansprüche, dadurch gekennzeichnet, dass die Schicht von Platin, gold oder Silber ist.

13. Redox-messgerät für die Bestimmung von redox-Potentialen bei höheren Temperaturen oder Drucken, und/oder sterielen Umständen, versehen mit einer Elektrode nach einem oder mehreren der vorangehenden Ansprüche.

FIG 1

FIG 2